# EUROPEAN PATENT APPLICATION

(11) **EP 1 982 885 A1**
(43) Date of publication of application: **22.10.2008**
(21) Application number: 06712699.5
(22) Date of filing: 31.01.2006
(51) Int. Cl.: B60T 8/1755, B60T 8/26

(54) **BRAKE CONTROL METHOD AND DEVICE FOR TWO-WHEELED MOTOR VEHICLE**

(71) Applicant: Bosch Corporation, Shibuya-ku Tokyo 150-8360 (JP)
(72) Inventor: OGAWA, Takahiro, Yokohama-shi, Kanagawa 2248501 (JP); WESTERFELD, Helge, Yokohama-shi, Kanagawa 2248501 (JP)
(74) Representative: Knapp, Thomas
(86) International application number: PCT/JP2006/301556
(87) International publication number: WO 2007/088590

(57) **Abstract**

To reliably control and prevent rear wheel lifting caused by an abrupt brake operation.

An amount of change in vehicle body deceleration is computed on the basis of detection signals of wheel velocity sensors 45 and 46 (S102), it is determined whether or not that computed value exceeds a predetermined value K1 (S104), and when it is determined that the computed value exceeds the predetermined value K1, then it is determined that there is the potential for rear wheel lifting, reduction of a pressure increase gradient of wheel cylinder pressure is performed (S106) until the amount of change in vehicle body deceleration falls below the predetermined value K1, and lifting of the rear wheel is reliably controlled.

## Description

### Technical Field

The present invention relates to a two-wheeled motor vehicle brake control method and system and in particular to the improvement of controllability with respect to rear wheel lifting.

### Background Art

Conventionally, it has been well known that, in two-wheeled motor vehicles, the larger the ratio between the height of the center of gravity of the vehicle and the inter-axial distance between the front and rear wheels is, the easier it is for the phenomenon of so-called lifting of the rear wheel to occur. Additionally, various coping technologies have been proposed with respect to such rear wheel lifting.

For example, in Patent Document 1, there is disclosed a technology that detects rear wheel lifting on the basis of various conditions such as vehicle deceleration and a drop in the velocity of the rear wheel and adjusts the braking force of the brake.

Incidentally, as mentioned above, although the structure of the vehicle body is a large factor that causes rear wheel lifting, it has conventionally been well known that rear wheel lifting is caused not only by this, but that performing an abrupt brake operation also becomes a large factor that causes rear wheel lifting.
Patent Document 1: Japanese Patent No. 3,416,819

### Disclosure of the Invention

### Problems to be Solved by the Invention

The present invention has been made in view of the above-described situation and provides a two-wheeled motor vehicle brake control method and system that can reliably control and prevent rear wheel lifting caused by an abrupt brake operation.

### Means for Solving the Problems

According to a first aspect of the present invention, there is provided a two-wheeled motor vehicle brake control method comprising: determining whether or not the value of a predetermined parameter that has been preselected as an index for predicting the potential for lifting of a rear wheel exceeds a predetermined value; and reducing a pressure increase gradient of a wheel cylinder pressure when it has been determined that the predetermined parameter exceeds the predetermined value.

According to a second aspect of the present invention, there is provided a two-wheeled motor vehicle brake control system configured to be capable of transmitting oil pressure arising in a front brake master cylinder in response to operation of a first brake operator to a front wheel cylinder via an oil pressure system, capable of transmitting oil pressure arising in a rear brake master cylinder in response to operation of a second brake operator to a rear wheel cylinder via an oil pressure system, and capable of discharging brake fluid of the front wheel cylinder to a front reservoir as desired, wherein the brake control system is configured to determine whether or not the value of a predetermined parameter that has been preselected as an index for predicting the potential for lifting of a rear wheel exceeds a predetermined value and discharge the brake fluid of the front wheel cylinder such that a pressure increase gradient of the front wheel cylinder pressure becomes smaller when it has been determined that the predetermined parameter exceeds the predetermined value.

### Advantage of the Invention

According to the present invention, the invention is configured to lower the gradient of the pressure increase of the front wheel cylinder at a point in time when lifting of the rear wheel is predicted, whereby the invention provides the effects that a sudden increase in brake pressure with respect to the front wheel is alleviated, rear wheel lifting is reliably controlled and prevented thereby, and more reliable safety of the vehicle and the rider can be ensured.

Further, when the invention is configured to maintain the front wheel cylinder pressure at a constant pressure or reduce the front wheel cylinder pressure to a constant pressure at a point in time when lifting of the rear wheel is predicted, the invention can stop or temporarily lower a sudden increase in brake pressure with respect to the front wheel, so rear wheel lifting is reliably controlled and prevented thereby, and more reliable safety of the vehicle and the rider can be ensured.

### Brief Description of Drawings

FIG. 1 is a configural diagram showing an example of the configuration of a brake control system in an embodiment of the present invention.
FIG. 2 is a sub-routine flowchart showing a processing procedure of first brake control that is executed by an electronic control unit of the brake control system shown in FIG. 1.
FIG. 3 is a general characteristic line diagram generally showing an example of change in master cylinder pressure in the first brake control shown in FIG. 2.
FIG. 4 is a sub-routine flowchart showing a processing procedure of second brake control that is executed by the electronic control unit of the brake control system shown in FIG. 1.
FIG. 5 is a sub-routine flowchart showing a processing procedure of third brake control that is executed by the electronic control unit of the brake control system shown in FIG. 1.
FIG. 6 is a sub-routine flowchart showing a processing procedure of fourth brake control that is executed by the electronic control unit of the brake control system shown in FIG. 1.
FIG. 7 is a sub-routine flowchart showing a processing procedure of fifth brake control that is executed by the electronic control unit of the brake control system shown in FIG. 1.

### Explanation of Codes

- 1: Front Brake Master Cylinder
- 2: Rear Brake Master Cylinder
- 3: Front Wheel Cylinder
- 4: Rear Wheel Cylinder
- 16: Front Reservoir
- 24: Rear Reservoir
- 35: Brake Handle
- 36: Brake Pedal
- 41: Motor Drive Circuit
- 42: Electromagnetic Valve Drive Circuit

### Description of Specific Embodiment

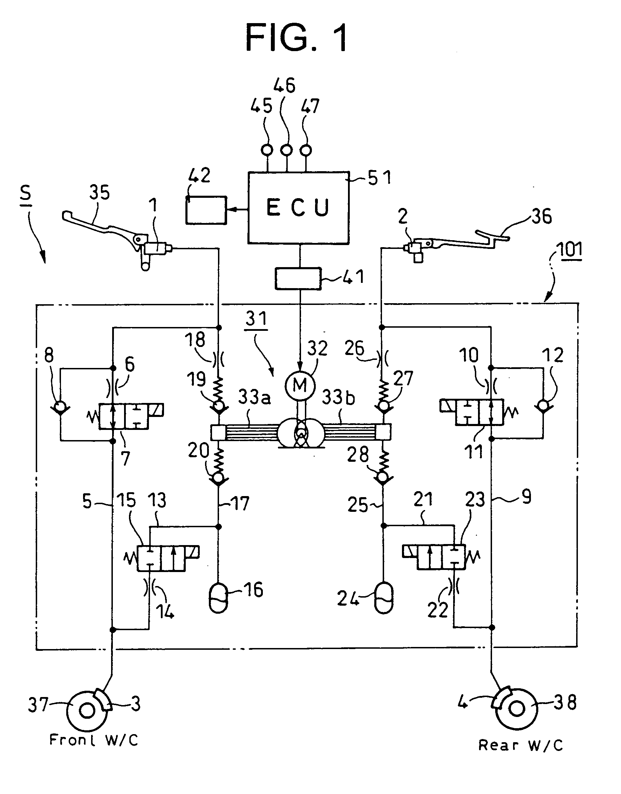

Below, an embodiment of the present invention will be described with reference to FIG. 1 to FIG. 7.

It will be noted that the members and arrangements described below are not intended to limit the invention and can be variously modified within the scope of the gist of the invention.

First, an example of the configuration of a brake control system in the embodiment of the invention will be described with reference to FIG. 1.

This brake control system S is broadly divided into a front brake master cylinder 1 that is disposed so as to be capable of converting the operational force of a brake handle 35 serving as a first brake operator into oil pressure, a rear brake master cylinder 2 that is disposed so as to be capable of converting the operational force of a brake pedal 36 serving as a second brake operator into oil pressure, a front wheel cylinder 3 that imparts brake force to a front wheel 37 in response to the oil pressure from the front brake master cylinder 1, a rear wheel cylinder 4 that imparts brake force to a rear wheel 38 in response to the oil pressure from the rear brake master cylinder 2, and an antilock brake control system 101; the antilock brake control system 101 is disposed between the front and rear brake master cylinders 1 and 2 and the front and rear wheel cylinders 3 and 4.

The front brake master cylinder 1 and the front wheel cylinder 3 are interconnected by a first main oil pressure tube 5, and a front main oil pressure tube-use throttle 6 and a first electromagnetic valve 7 that is ordinarily in an opened state are disposed in order from the front brake master cylinder 1 side midway along the first main oil pressure tube 5. Moreover, a front main oil pressure tube-use check valve 8 is disposed so as to bypass the front main oil pressure tube-use throttle 6 and the first electromagnetic valve 7 and in a direction where it deters the reverse flow of brake oil (brake fluid) from the front wheel cylinder 3 to the front brake master cylinder 1.

Similarly, the rear brake master cylinder 2 and the rear wheel cylinder 4 are interconnected by a second main oil pressure tube 9, and a rear main oil pressure tube-use throttle 10 and a second electromagnetic valve 11 that is ordinarily in an opened state are disposed in order from the rear brake master cylinder 2 side midway along the second main oil pressure tube 9. Moreover, a rear main oil pressure tube-use check valve 12 is disposed so as to bypass the rear main oil pressure tube-use throttle 10 and the second electromagnetic valve 11 and in a direction where it deters the reverse flow of brake oil from the rear wheel cylinder 4 to the rear brake master cylinder 2.

Further, a front reservoir connection-use oil pressure tube 13 is connected to an appropriate position of the first main oil pressure tube 5 between the first electromagnetic valve 7 and the front wheel cylinder 3, a front reservoir-use throttle 14 and a front reservoir inflow control-use electromagnetic valve 15 are disposed in order from the front wheel cylinder 3 side midway along the front reservoir connection-use oil pressure tube 13, and a front reservoir 16 is connected via these. Here, the front reservoir inflow control-use electromagnetic valve 15 is ordinarily in a closed state.

Moreover, a front return-use oil pressure tube 17 that is communicated with the front brake master cylinder 1 is connected to the front reservoir connection-use oil pressure tube 13 at an appropriate position between the front reservoir inflow control-use electromagnetic valve 15 and the front reservoir 16, and a front return path-use throttle 18, a first front return path-use check valve 19 and a second front return path-use check valve 20 are disposed in order from the front brake master cylinder 1 side midway along the front return-use oil pressure tube 17.

Further, basically similar to the configuration of the aforementioned first main oil pressure tube 5, a rear reservoir connection-use oil pressure tube 21 is connected to an appropriate position of the second main oil pressure tube 9 between the second electromagnetic valve 11 and the rear wheel cylinder 4, a rear reservoir-use throttle 22 and a rear reservoir inflow control-use electromagnetic valve 23 are disposed in order from the rear wheel cylinder 4 side midway along the rear reservoir connection-use oil pressure tube 21, and a rear reservoir 24 is connected via these. Here, the rear reservoir inflow control-use electromagnetic valve 23 is ordinarily in a closed state.

Moreover, a front return-use oil pressure tube 25 that is communicated with the rear brake master cylinder 2 is connected to the second reservoir connection-use oil pressure tube 21 at an appropriate position between the rear reservoir inflow control-use electromagnetic valve 23 and the rear reservoir 24, and a rear return path-use throttle 26, a first rear return path-use check valve 27 and a second rear return path-use check valve 28 are disposed in order from the rear brake master cylinder 2 side midway along the front return-use oil pressure tube 25.

Moreover, an oil pressure pump device 31 that is shared between the front brake and the rear brake is disposed in the antilock brake control system 101. That is, the oil pressure pump device 31 is generally configured by a motor 32 and two plungers 33a and 33b that are reciprocally moved by an unillustrated fixed cam that is fixedly attached to an output shaft (not shown) of the motor 32.

Additionally, the one plunger 33a is connected between the first front return path-use check valve 19 and the second front return path-use check valve 20, the other plunger 33b is connected between the first rear return path-use check valve 27 and the second rear return path-use check valve 28, and the brake oil of the front reservoir 16 is sucked up and refluxed to the front brake master cylinder 1 and the brake oil of the rear reservoir 24 is sucked up and refluxed to the rear brake master cylinder 2 by the reciprocating motion of the plungers 33a and 33b.

Control of the operation of each of the first and second electromagnetic valves 7 and 11, the front reservoir inflow control-use electromagnetic valve 15, the rear reservoir inflow control-use electromagnetic valve 23 and the motor 32 is performed by an electronic control unit (notated as "ECU" in FIG. 1) 51.

The electronic control unit 51 is configured to be disposed with a microcomputer (not shown) that has a publicly known/commonly known configuration and memory elements (not shown) such as a RAM and a ROM.

The electronic control unit 51 executes various control programs for controlling the traveling of the vehicle that are stored in the unillustrated memory elements and performs various operation controls necessary for the driving and traveling of the vehicle. Examples of such operational controls of the vehicle include engine control, ABS control (Antilock Brake System), monitoring of the wheel velocities for determining whether or not there is an abnormality in wheel velocity sensors, detection of rear wheel lifting, and detection of skidding of the wheels. Moreover, in the embodiment of the present invention, later-described brake control processing is executed.

In order to perform the aforementioned control processing, detection signals of wheel velocity sensors 45 and 46 that are correspondingly disposed in order to detect the wheel velocities of the front wheel 37 and the rear wheel 38 and a detection signal of a pressure sensor 47 that detects the generated pressure of the front wheel cylinder 3 are inputted to the electronic control unit 51.
Moreover, detection signals of a brake lever actuation switch (not shown) that detects actuation of the brake handle 35 and a brake pedal actuation switch (not shown) that detects actuation of the brake pedal 36 are also inputted to the electronic control unit 51.

Further, a motor drive circuit 41 that generates and outputs a drive signal with respect to the motor 32 in response to a control signal from the electronic control unit 51 is disposed.

Moreover, an electromagnetic valve drive circuit 42 that controls the driving of the first and second electromagnetic valves 7 and 11, the front reservoir inflow control-use electromagnetic valve 15 and the rear reservoir inflow control-use electromagnetic valve 23 in response to control signals from the electronic control unit 51 is disposed. It will be noted that, in FIG. 1, the connections between the electromagnetic valve drive circuit 42 and the respective electromagnetic valves are omitted in order to simplify the drawing and make the drawing easier to understand.

It will be noted that the basic operation of the brake control system S of the aforementioned configuration is the same as that of this type of publicly known/commonly known brake control systems, so detailed description here will be omitted, but the overall operation will be generally described.

For example, when the brake handle 35 is operated in order to cause the brake to act, a detection signal corresponding to the fact that that operation has been detected by the brake lever actuation switch (not shown) that detects operation of the brake handle 35 is inputted to the electronic control unit 51. At the same time, brake fluid of an oil pressure corresponding to operation of the brake handle 35 is supplied from the brake master cylinder 1 to the front wheel cylinder 3, brake force is generated, and the brake force acts on the front wheel 37.

Then, in the electronic control unit 51, when it is judged that antilock brake control is necessary, the first electromagnetic valve 7 is excited, the first main oil pressure tube 5 is placed in a non-communicated state, and the oil pressure of the front wheel cylinder 3 is maintained at a constant. Then, in the electronic control unit 51, when it is judged that the brake should be eased, the front reservoir inflow control-use electromagnetic valve 15 is excited. As a result, the brake fluid of the front wheel cylinder 3 is discharged to the front reservoir 16 via the front reservoir inflow control-use electromagnetic valve 15, and the brake is eased.

At the same time, the motor 32 is driven by the electronic control unit 51 via the motor drive circuit 41, and the brake fluid stored in the front reservoir 16 is sucked up by the motion of the plunger 33a and refluxed to the front brake master cylinder 1.

It will be noted that when the brake pedal 36 is operated also, brake force with respect to the wheel 38 is obtained in basically the same manner as in the case of the brake handle 35, and alleviation of the brake force is performed, so description here will be omitted.

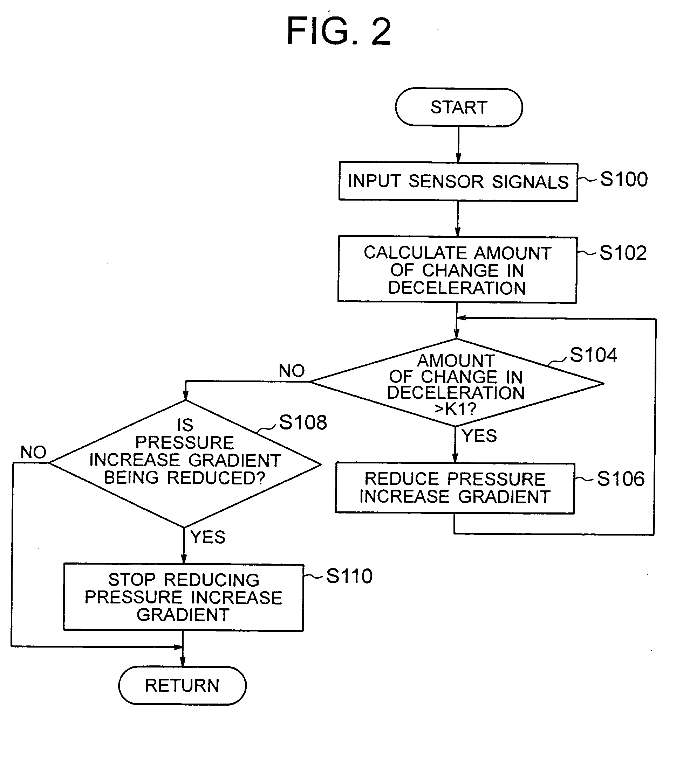

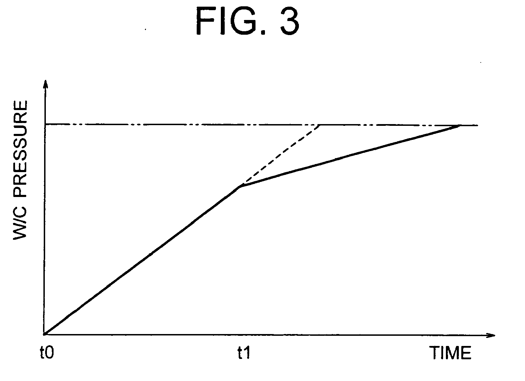

Next, a first example of brake control processing that is executed by the electronic control unit 51 in this configuration will be described with reference to the sub-routine flowchart shown in FIG. 2 and the characteristic line diagram shown in FIG. 3.

When processing is initiated, first, at least the detection signals (sensor signals) of the wheel velocity sensors 45 and 46 are inputted to the electronic control unit 51 and temporarily saved in an unillustrated predetermined memory region (refer to step S100 of FIG. 2). It will be noted that, in step S100, other sensor signals -- that is, the detection signal of the pressure sensor 47 and the like -- may also be inputted, and those input signals can be delivered when they are needed by other control processing outside of brake control processing.

Next, computation of the amount of change in vehicle body deceleration is performed on the basis of the detection signals of the wheel velocity sensors 45 and 46 that have been inputted (refer to step S102 of FIG. 2). That is, in the embodiment of the present invention, the amount of change in vehicle body deceleration is calculated as an index for predicting the potential for lifting of the reel wheel resulting from an abrupt increase in brake pressure. It will be noted that, in this manner, when an abrupt increase in brake pressure occurs because of the amount of change in vehicle body deceleration and it is thereby judged that there is the potential for rear wheel lifting, the pressure sensor 47 that detects the pressure of the front wheel cylinder 3 that has been mentioned before is unnecessary.

In order to determine the amount of change in vehicle body deceleration, first, a pseudo vehicle body velocity is computed and calculated using a predetermined arithmetic expression on the basis of the detection signals of the wheel velocity sensors 45 and 46 that have been inputted. Next, the amount of change in vehicle body deceleration is calculated from this pseudo vehicle body velocity.

That is, the amount of change in vehicle body deceleration is determined as being equal to (V1-V2)/Δt² assuming that V1 represents a pseudo vehicle body velocity at a given time t1 and that V2 represents a pseudo vehicle body velocity at a time t2 after the elapse of a minute amount of time Δt from time t1.

Next, it is determined whether or not the amount of change in vehicle body deceleration that has been calculated as mentioned above exceeds a predetermined value K1 (refer to step S104 of FIG. 2), and when it is determined that the amount of change in vehicle body deceleration does not exceed the predetermined value K1 (in the case of NO), then the series of processing is ended and the sub-routine returns to an unillustrated main routine. On the other hand, in step S104, when it is determined that the amount of change in vehicle body deceleration exceeds the predetermined value K1 (in the case of YES), then it is determined that an abrupt increase in brake pressure has occurred and that there is thus a large potential for rear wheel lifting, the sub-routine moves to the processing of the next step S106, and the pressure increase gradient of the brake pressure -- that is, in other words, the pressure increase gradient of the wheel cylinder pressure (the pressure of front wheel cylinder 3) -- is forcibly reduced.

That is, specifically, the front reservoir inflow control-use electromagnetic valve 15 is placed in an opened state by the electronic control unit 51 via the electromagnetic valve drive circuit 42, and some of the brake oil of the front wheel cylinder 3 is discharged to the front reservoir 16, whereby the pressure increase gradient of the wheel cylinder pressure is reduced.

In FIG. 3, there is shown a characteristic line diagram showing an example of a general change in the wheel cylinder pressure in this case, and to describe this below in regard to the same drawing, first, in the same drawing, the horizontal axis is a time axis and the vertical axis represents the wheel cylinder pressure (notated as "W/C pressure" in FIG. 3) or, in other words, brake force.

In the same drawing, a state where, from time t0 to time t1, the wheel cylinder pressure steeply increases because of a sudden brake operation is represented by a solid line. Additionally, there is shown a state where, at time t1, it is determined that the amount of change in vehicle body deceleration exceeds the predetermined value K1 (step S104 of FIG. 2), the aforementioned forcible reduction of the pressure increase gradient of the wheel cylinder pressure is initiated and, in accompaniment therewith, the wheel cylinder pressure slowly changes from time t1 thereafter in comparison to before (refer to the solid characteristic line of FIG. 3).

It will be noted that the extent to which the reduction of the pressure increase gradient is to be done, or in other words the amount of time during which the front reservoir inflow control-use electromagnetic valve 15 is to be opened, is determined in response to specific conditions of the vehicle and is not unequivocally determined. Consequently, it is suitable to set an optimum value on the basis of simulations and experiments in response to the specific conditions of individual vehicles.

While the aforementioned forcible reduction of the pressure increase gradient of the wheel cylinder pressure is being performed, it is determined as needed whether or not the amount of change in vehicle body deceleration exceeds the predetermined value K1.

Then, in step S104, when it is determined that the amount of change in vehicle body deceleration does not exceed the predetermined value K1 (in the case of NO), then it is determined whether or not forcible reduction of the pressure increase gradient of the wheel cylinder pressure is being performed (refer to step S108 of FIG. 2).

In step S108, when it is determined that forcible reduction of the pressure increase gradient is not being performed (in the case of NO), then the series of processing is ended and the sub-routine returns to the unillustrated main routine. On the other hand, in step S108, when it is judged that forcible reduction of the pressure increase gradient is being performed (in the case of YES), then operation of the forcible reduction of the pressure increase gradient that has been described before is stopped, the sub-routine returns to the unillustrated main routine, and normal brake control is executed.

It will be noted that, in the first example of brake control processing, the amount of change in vehicle body deceleration was used as an index for predicting the potential for lifting of the rear wheel resulting from an abrupt increase in brake pressure, but vehicle body deceleration may also be used instead of the amount of change in vehicle body deceleration. Specifically, in this case, in step S102 of FIG. 2, vehicle body deceleration is calculated, and vehicle body deceleration is determined on the basis of the pseudo vehicle body velocities as being equal to (V1-V2)/Δt. Here, the meanings of the pseudo vehicle body velocities V1 and V1 and Δt are as has been mentioned in step S102.

Additionally, the embodiment may also be configured such that, in step S102, it is determined whether or not vehicle body deceleration that has been calculated in this manner exceeds a predetermined value K1'.

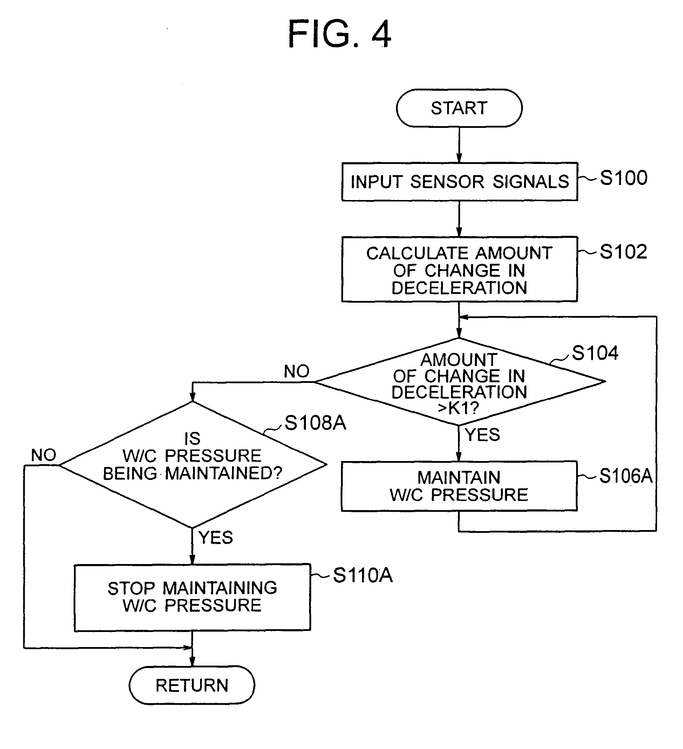

Next, a second example of brake control processing will be described with reference to FIG. 4.

It will be noted that, in the sub-routine flowchart shown in FIG. 4, the same step numbers will be given to steps having the same processing content as those in the sub-routine flowchart shown in FIG. 2, detailed description of those steps having the same processing content will be omitted, and the points that are different will be mainly described below.

This second control example is an example configured such that, when it is determined that the amount of change in vehicle body deceleration exceeds the predetermined value K1, then the wheel cylinder pressure is maintained instead of forcible reduction (refer to step S106 of FIG. 2) of the pressure increase gradient of the wheel cylinder pressure shown in FIG. 2.

That is, in step S104, when it is determined that the amount of change in vehicle body deceleration exceeds the predetermined value K1, then the wheel cylinder pressure is maintained at the pressure at that point in time (refer to step S106A of FIG. 4). Specifically, the first electromagnetic valve 7 is placed in a closed state by the electronic control unit 51 via the electromagnetic valve drive circuit 42, whereby the pressure is maintained. Then, when it is determined that the amount of change in vehicle body deceleration does not exceed the predetermined value K1 while pressure maintenance is being performed, then the sub-routine moves to step S108A, it is determined whether or not the wheel cylinder pressure is being maintained, and when it is determined that the wheel cylinder pressure is not being maintained (in the case of NO), then the series of processing is ended and the sub-routine returns to the unillustrated main routine. On the other hand, when it is determined that the wheel cylinder pressure is being maintained (in the case of YES), then the state of that pressure maintenance is stopped, the sub-routine returns to the unillustrated main routine, and normal brake control is executed.

It will be noted that, in this second example also, the amount of change in vehicle body deceleration was used as an index for predicting the potential for lifting of the rear wheel resulting from an abrupt increase in brake pressure, but as mentioned also in the first example, vehicle body deceleration may also be used instead of the amount of change in vehicle body deceleration.

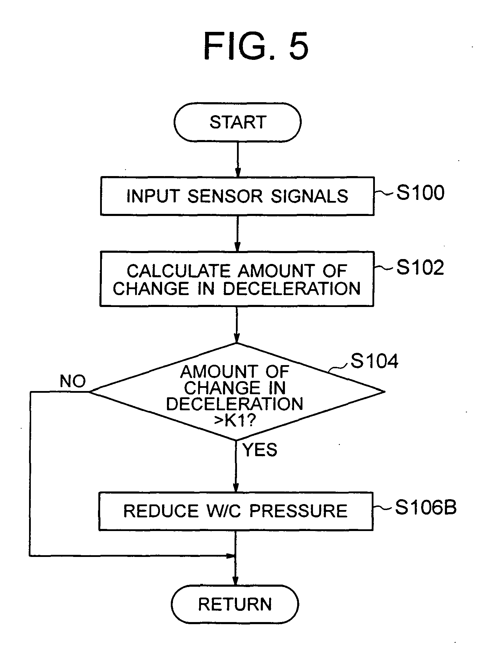

Next, a third example of brake control processing will be described with reference to FIG. 5.

It will be noted that, in the sub-routine flowchart shown in FIG. 5, the same step numbers will be given to steps having the same processing content as those in the sub-routine flowchart shown in FIG. 2, detailed description of those steps having the same processing content will be omitted, and the points that are different will be mainly described below.

This third control example is an example configured such that, when it is determined that the amount of change in vehicle body deceleration exceeds the predetermined value K1, then a reduction of the wheel cylinder pressure is performed.

That is, in step S104, when it is determined that the amount of change in vehicle body deceleration does not exceed the predetermined value K1 (in the case of NO), then the series of processing is ended and the sub-routine returns to the unillustrated main routine, and when it is determined that the amount of change in vehicle body deceleration exceeds the predetermined value K1 (in the case of YES), then reduction of the wheel cylinder pressure by a certain amount is performed and the series of processing is ended (refer to step S106B of FIG. 5).

Here, reduction of the wheel cylinder pressure is performed as a result of the front reservoir inflow control-use electromagnetic valve 15 being temporarily placed in an opened state by the electronic control unit 51 via the electromagnetic valve drive circuit 42 and some of the brake oil of the front wheel cylinder 3 being discharged to the front reservoir 16. It will be noted that, because the pressure reduction amount and the amount of time that the front reservoir inflow control-use electromagnetic valve 15 is placed in an opened state are not unequivocally determined due to differences in the specific conditions of the vehicle, it is suitable to set optimum values on the basis of simulations and experiments in response to specific conditions of individual vehicles.

It will be noted that, in this third example also, the amount of change in vehicle body deceleration was used as an index for predicting the potential for lifting of the rear wheel resulting from an abrupt increase in brake pressure, but as mentioned also in the first example, vehicle body deceleration may also be used instead of the amount of change in vehicle body deceleration.

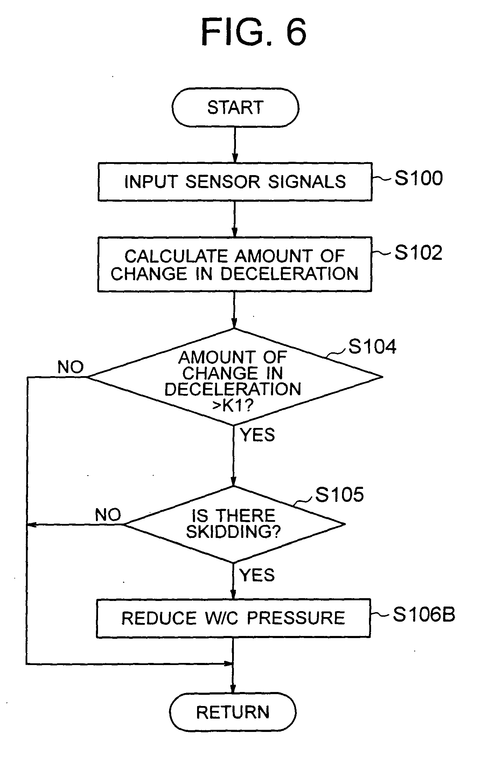

Next, a fourth example of brake control processing will be described with reference to FIG. 6.

It will be noted that, in the sub-routine flowchart shown in FIG. 6, the same step numbers will be given to steps having the same processing content as those in the sub-routine flowchart shown in FIG. 2 or FIG. 5, detailed description of those steps having the same processing content will be omitted, and the points that are different will be mainly described below.

This fourth control example is an example where whether or not there is skidding of the front wheel 37 is added to one of the conditions for performing reduction of the wheel cylinder pressure in the third control example shown in FIG. 5.

That is, in step S104, when it is determined that the amount of change in vehicle body deceleration exceeds the predetermined value K1 (in the case of YES), then whether or not there is skidding -- that is, whether or not predetermined skidding or greater is occurring in the front wheel 37 -- is determined (refer to step S105 of FIG. 6).

Here, in regard to whether or not there is occurrence of skidding and the magnitude thereof, it suffices for these to be determined based on a publicly known/commonly known technique, and it is not necessary for these to be determined by a technique that is specific to the invention of the present application. In particular, in the embodiment of the present invention, it is assumed that whether or not there is skidding and the magnitude thereof are judged while control of the operation of the antilock brake control system 101 is performed by the electronic control unit 51, and the result of determining whether or not there is skidding and the magnitude thereof at the point in time when step S105 is executed may be appropriated.

Then, in step S105, when it is determined that there is predetermined skidding or greater (in the case of YES), then reduction of the wheel cylinder pressure by a certain amount is performed (refer to step S106B of FIG. 6). On the other hand, in step S105, when it is determined that there is no predetermined skidding or greater (in the case of NO), then the sub-routine returns to the unillustrated main routine and normal brake control is executed.

In this manner, lifting of the rear wheel is predicted, and the method of controlling the wheel cylinder pressure on the condition of the occurrence of skidding of the front wheel 37 is, in comparison to conditions of vehicles in conventional brake control, particularly suited for a vehicle that easily skids.

It will be noted that, in this fourth example also, the amount of change in vehicle body deceleration was used as an index for predicting the potential for lifting of the rear wheel resulting from an abrupt increase in brake pressure, but as mentioned also in the first example, vehicle body deceleration may also be used instead of the amount of change in vehicle body deceleration.

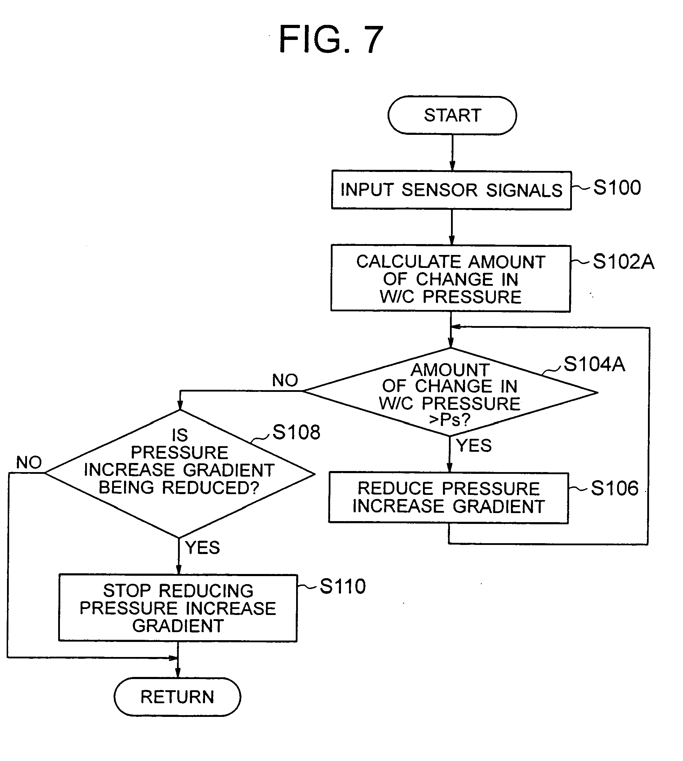

Next, a fifth example of brake control processing will be described with reference to FIG. 7.

It will be noted that, in the sub-routine flowchart shown in FIG. 7, the same step numbers will be given to steps having the same processing content as those in the sub-routine flowchart shown in FIG. 2, detailed description of those steps having the same processing content will be omitted, and the points that are different will be mainly described below.

Whereas the first to fourth control examples that have been described before were examples assuming a configuration that does not include the pressure sensor 47 that detects the pressure of the front wheel cylinder 3, this fifth control example is an example assuming a configuration that includes the pressure sensor 47.

Additionally, in the first to fourth control examples, the pressure sensor 47 was unnecessary because the amount of change in vehicle body deceleration was used as an index for predicting the potential for lifting of the rear wheel resulting from an abrupt increase in brake pressure, but in this fifth control example, the amount of change in the wheel cylinder pressure is calculated on the basis of the detection signal of the pressure sensor 47 (refer to step S102A of FIG. 7). That is, assuming that P1 represents the wheel cylinder pressure at a given time and that P2 represents the master cylinder pressure after the elapse of a minute amount of time Δt from that time, then the amount of change Pc in the master cylinder pressure is determined as Pc = (P2-P1)/Δt.

After the amount of change in the wheel cylinder pressure has been determined as mentioned above, it is determined whether or not that amount of change exceeds a predetermined value Ps (refer to step S104A of FIG. 7).

Then, when it is determined that the amount of change in the wheel cylinder pressure exceeds the predetermined value Ps, then similar to the first control example, the pressure increase gradient of the brake pressure -- that is, in other words, the pressure increase gradient of the wheel cylinder pressure -- is forcibly reduced.

It will be noted that, because the details of the forced control of the pressure increase gradient of the wheel cylinder pressure are as have been previously described in the first control example, detailed description again here will be omitted.

Examples of brake control using the detection signal of the pressure sensor 47 are not limited to an example configured to perform control on the basis of the detection signal of the pressure sensor 47 in the first control example shown in FIG. 2 as mentioned above; in regard also to each of the control examples shown in FIG. 4 to FIG. 6, the respective controls thereof can be performed in the same manner on the basis of the detection signal of the pressure sensor 47.

Specifically, in each case, steps S102A and S104A shown in FIG. 7 may be executed instead of the processing of steps S102 and S104, and the other processing is basically the same as the processing shown in FIG. 4 to FIG. 6. It will be noted that, as for detailed description in regard to each control in those cases, the processing of steps S102A and S104A has already been described in the control example of FIG. 7 as mentioned above, and the processing of other portions is the same as has been described in the respective control examples of FIG. 4 to FIG. 6, so it will be omitted.

Further, the aforementioned fifth example is an example using the amount of change in the wheel cylinder pressure as an index for predicting the potential for lifting of the rear wheel resulting from an abrupt increase in brake pressure, but it may also be configured to use the wheel cylinder pressure instead of the amount of change in the wheel cylinder pressure. Specifically, in this case, in step S102A, the magnitude of the wheel cylinder pressure is determined on the basis of the detection value from the pressure sensor 47, and in step S104, it is determined whether or not that wheel cylinder pressure exceeds a predetermined value.

### Industrial Applicability

The present invention can reliably control and prevent rear wheel lifting caused by an abrupt brake operation in a two-wheeled motor vehicle and can be applied to brake control of a two-wheeled motor vehicle.

## Claims

1. A two-wheeled motor vehicle brake control method comprising:
determining whether or not the value of a predetermined parameter that has been preselected as an index for predicting the potential for lifting of a rear wheel exceeds a predetermined value; and
reducing a pressure increase gradient of wheel cylinder pressure when it has been determined that the predetermined parameter exceeds the predetermined value.

2. A two-wheeled motor vehicle brake control method comprising:
determining whether or not the value of a predetermined parameter that has been preselected as an index for predicting the potential for lifting of a rear wheel exceeds a predetermined value; and
maintaining wheel cylinder pressure at a constant pressure when it has been determined that the predetermined parameter exceeds the predetermined value.

3. A two-wheeled motor vehicle brake control method comprising:
determining whether or not the value of a predetermined parameter that has been preselected as an index for predicting the potential for lifting of a rear wheel exceeds a predetermined value; and
reducing wheel cylinder pressure by a certain amount when it has been determined that the predetermined parameter exceeds the predetermined value.

4. The two-wheeled motor vehicle brake control method of claim 3, wherein when it is determined that the predetermined parameter exceeds the predetermined value, then it is determined whether or not skidding is occurring in a front wheel, and when it is determined that skidding is occurring in the front wheel, then wheel cylinder pressure is reduced by a certain amount.

5. The two-wheeled motor vehicle brake control method of any of claims 1 to 4, wherein the predetermined parameter is vehicle body deceleration or an amount of change in vehicle body deceleration.

6. The two-wheeled motor vehicle brake control method of any of claims 1 to 4, wherein the predetermined parameter is wheel cylinder pressure or an amount of change in wheel cylinder pressure.

7. A two-wheeled motor vehicle brake control system configured to be capable of transmitting oil pressure arising in a front brake master cylinder in response to operation of a first brake operator to a front wheel cylinder via an oil pressure system, capable of transmitting oil pressure arising in a rear brake master cylinder in response to operation of a second brake operator to a rear wheel cylinder via an oil pressure system, and capable of discharging brake fluid of the front wheel cylinder to a front reservoir as desired,
wherein the brake control system is configured to
determine whether or not the value of a predetermined parameter that has been preselected as an index for predicting the potential for lifting of a rear wheel exceeds a predetermined value and
discharge the brake fluid of the front wheel cylinder such that a pressure increase gradient of the front wheel cylinder pressure becomes smaller when it has been determined that the predetermined parameter exceeds the predetermined value.

8. A two-wheeled motor vehicle brake control system configured to be capable of transmitting oil pressure arising in a front brake master cylinder in response to operation of a first brake operator to a front wheel cylinder via an oil pressure system, capable of transmitting oil pressure arising in a rear brake master cylinder in response to operation of a second brake operator to a rear wheel cylinder via an oil pressure system, and capable of discharging brake fluid of the front wheel cylinder to a front reservoir as desired,
wherein the brake control system is configured to
determine whether or not the value of a predetermined parameter that has been preselected as an index for predicting the potential for lifting of a rear wheel exceeds a predetermined value and
block off communication between the front brake master cylinder and the front wheel cylinder and maintain the front wheel cylinder pressure at a constant pressure when it has been determined that the predetermined parameter exceeds the predetermined value.

9. A two-wheeled motor vehicle brake control system configured to be capable of transmitting oil pressure arising in a front brake master cylinder in response to operation of a first brake operator to a front wheel cylinder via an oil pressure system, capable of transmitting oil pressure arising in a rear brake master cylinder in response to operation of a second brake operator to a rear wheel cylinder via an oil pressure system, and capable of discharging brake fluid of the front wheel cylinder to a front reservoir as desired,
wherein the brake control system is configured to
determine whether or not the value of a predetermined parameter that has been preselected as an index for predicting the potential for lifting of a rear wheel exceeds a predetermined value and
discharge the brake fluid of the front wheel cylinder such that the front wheel cylinder pressure is reduced by a certain amount when it has been determined that the predetermined parameter exceeds the predetermined value.

10. The two-wheeled motor vehicle brake control system of claim 9, wherein the brake control system is configured such that, when it is determined that the predetermined parameter exceeds the predetermined value, then the brake control system determines whether or not skidding is occurring in the front wheel, and when it is determined that skidding is occurring in the front wheel, then the brake control system reduces the front wheel cylinder pressure by a certain amount.

11. The two-wheeled motor vehicle brake control system of any of claims 7 to 10, wherein the predetermined parameter is vehicle body deceleration or an amount of change in vehicle body deceleration.

12. The two-wheeled motor vehicle brake control system of any of claims 7 to 10, wherein the predetermined parameter is wheel cylinder pressure or an amount of change in wheel cylinder pressure.
